Europäisches Patentamt

European Patent Office

Office européen des brevets

(11) Veröffentlichungsnummer: **0 423 883 A2**

## (12) EUROPÄISCHE PATENTANMELDUNG

(21) Anmeldenummer: **90202710.1**

(22) Anmeldetag: **12.10.90**

(51) Int. Cl.⁵: **G11B 15/29, G11B 15/665**

(30) Priorität: **17.10.89 AT 2386/89**

(43) Veröffentlichungstag der Anmeldung:
**24.04.91 Patentblatt 91/17**

(84) Benannte Vertragsstaaten:
**AT DE FR GB**

(71) Anmelder: **N.V. Philips' Gloeilampenfabrieken**
**Groenewoudseweg 1**
**NL-5621 BA Eindhoven(NL)**

(72) Erfinder: **Hodulik, Wolfgang**
**c/o INT. OCTROOIBUREAU B.V., Prof.**
**Holstlaan 6**
**NL-5656 AA Eindhoven(NL)**
Erfinder: **Vollmann, Norbert**
**c/o INT. OCTROOIBUREAU B.V., Prof.**
**Holstlaan 6**
**NL-5656 AA Eindhoven(NL)**

(74) Vertreter: **Van Weele, Paul Johannes Frits et al**
**INTERNATIONAAL OCTROOIBUREAU B.V.**
**Prof. Holstlaan 6**
**NL-5656 AA Eindhoven(NL)**

(54) **Bandgerät sowie Andruckrollenanordnung anwendbar im Bandgerät.**

(57) Ein Bandgerät (1) zum Antreiben eines Bandes (12) ist mit einer Andruckrollenanordnung zum Andrücken eines bandförmigen Aufzeichnungsträgers an eine Antriebswelle (33) versehen, bei welcher Andruckrollenanordnung die Andruckrolle (29) auf einem Träger (105) drehbar und taumelbar gelagert ist und diese Lagerung mit zwei miteinander zusammenwirkenden Lagerteilen erfolgt, von welchen einer durch eine Kugel und der andere durch eine die Kugel teilweise umfassende Kugelpfanne gebildet ist, wobei die beiden Lagerteile koaxial zur Achse (107) der Andruckrolle innerhalb einer axial verlaufenden Vertiefung (108) in derselben liegen, ist vorgesehen, das die den einen der beiden Lagerteile bildende Kugel (110) innerhalb der Vertiefung mit der Andruckrolle (4) und die den anderen der beiden Lagerteile bildende Kugelpfanne (111) über einen Tragzapfen (109) mit dem Träger (105) fest verbunden ist.

FIG.3

# BANDGERÄT SOWIE ANDRUCKROLLENANORDNUNG ANWENDBAR IM BANDGERÄT

Die Erfindung betrifft ein Bandgerät zum antreiben eines Bandes, welches Bandgerät eine Andruckrollenanordrtung zum Andrücken eines bandförmigen Aufzeichnungsträgers an eine Antriebswelle umfast, bei welcher die Andruckrolle auf einem Träger drehbar und taumelbar gelagert ist und diese Lagerung mit zwei miteinander zusammenwirkenden Lagerteilen erfolgt, von welchen einer durch eine Kugel und der andere durch eine die Kugel teilweise umfassende Kugelpfanne gebildet ist wobei die beiden Lagerteile koaxial zur Achse der Andruckrolle innerhalb einer axial verlaufenden Vertiefung in derselben liegen und einer der beiden Lagerteile innerhalb der Vertiefung mit der Andruckrolle und der andere der beiden Lagerteile über einen Tragzapfen mit dem Träger fest verbunden ist.

Die Erfindung betrifft zugleich eine Andruckrollenanordnung anwendbar im Bandgerät. Eine derartige Andruckrollenanordnung, wie sie aus der DE-OS 29 33 965 bekannt ist, dient dazu, dass sich die frei drehbar gelagerte Andruckrolle zufolge ihrer zusätzlichen taumelbaren Lagerung umfangsseitig vollständig an die Antriebswelle beziehungsweise den von derselben anzutreibenden bandförmigen Aufzeichnungsträger anlegen und so gleichförmig mit der Antriebswelle beziehungsweise dem bandförmigen Aufzeichnungsträger zusammenwirken kann, dies auch für den Fall, dass die Achse der Antriebswelle etwas geneigt gegenüber der Achse der Andruckrolle verläuft. Bekanntlich ist ein solches gleichförmiges Anliegen der Andruckrolle an der Antriebswelle beziehungsweise dem bandförmigen Aufzeichnungsträger von ganz besonderer Bedeutung für eine einwandfreie gleichförmige Fortbewegung des bandförmigen Aufzeichnungsträgers. Bei der vorstehend erwähnten bekannten Andruckrollenanordnung ist dabei vorgesehen, dass die den einen der beiden Lagerteile bildende Kugel mit dem Tragzapfen und die den anderen dsr beiden Lagerteile bildende Kugelpfanne innerhalb der Vertiefung in der Andruckrolle mit derselben fest verbunden ist, so dass sich die Kugelpfanne mit der Andruckrolle dreht, wogegen die Kugel stillsteht.

Die Erfindung hat sich zum Ziel gesetzt ein Bandgerät sowie eine Andruckrollenanordnung der eingangs angeführten Gattung in ihrer Wirkungsweise weiter zu verbessern, dahingehend, dass bei an die Antriebswelle beziehungsweise den bandförmigen Aufzeichnungsträger angelegter und sich dabei mitdrehender Andruckrolle auch während der Drehung der Andruckrolle ein exaktes gleichförmiges Anliegen derselben an der Antriebswelle beziehungsweise dem bandförmigen Aufzeichnungsträger gewährleistet ist. Erfindungsgemäss ist hierzu vorgesehen, dass die den einen der beiden Lagerteile bildende Kugel innerhalb der Vertiefung mit der Andruckrolle und die den anderen der beiden Lagerteile bildende Kugelpfanne über den Tragzapfen mit dem Träger fest verbunden ist. Auf diese Weise dreht sich die Kugel mit der Andruckrolle, wogegen die Kugelpfanne stillsteht. Die Erfindung beruht hierbei auf der an sich bekannten Erkenntnis, dass die Lagerung eines sich drehenden Teiles gegenüber einem stillstehenden Teil um so exakter ist, wenn der sich drehende Teil genauer herstellbar ist als der mit ihm, zusammenwirkende stillstehende Teil. Im vorliegenden Fall ist die den einen der beiden Lagerteile bildende Kugel hinsichtlich ihres Oberflächenverlaufes wesentlich genauer herstellbar als die den anderen der beiden Lagerteile bildende Kugelpfanne, weshalb erfindungsgemäss die Kugel als sich drehender Lagerteil gewählt wird und demgemäss innerhalb der Vertiefung in der Andruckrolle mit derselben fest verbunden ist, wogegen die Kugelpfanne als stillstehender Lagerteil gewählt wird und demgemäss über den Tragzapfen mit dem Träger fest verbunden ist. Bei der erfindungsgamäss ausgebildeten Andruckrollenanordnung wird daher genau der umgekehrte Lösungsweg beschritten als bei der durch die DE-OS 29 33 965 bekannten Andruckrollenanordnung. Hierzu ist festzustellen, dass es sich im vorliegenden Fall aber nicht nur um eine reine kinematische Umkehrung handelt, sondern dass dabei noch ein zusätzlicher Effekt eine Rolle spielt, der dadurch entsteht, dass jener der beiden Lagerteile als drehender Teil ausgewählt wird, der genauer herstellbar ist, wog der Schlag des sich drehenden Teiles auf ein Minimum reduziert wird. Auf diese Weise wird somit bei an die Antriebswelle beziehungsweise den bandförmigen Aufzeichnungsträger angelegter und sich dabei mitdrehender Andruckrolle ein besonders genauer gleichförmiger schlagfreier Lauf derselben und damit eine einwandfreie gleichförmige Fortbewegung des bandförmigen Aufzeichnungsträgers erreicht.

Als vorteilhaft hat sich hierbei erwiesen, wenn die den einen der beiden Lagerteile bildende Kugel von der den anderen der beiden Lagerteile bildenden Kugelpfanne in Bezug auf die Achse der Andruckrolle asymmetrisch umfasst ist, wobei bei an die Antriebswelle angelegter Andruckrolle die Öffnung der Kugelpfanne in Richtung zur Antriebswelle hin geneigt ist. Auf diese Weise wird eine besonders gute Kraftübertragung vom Träger auf die Andruckrolle zum Andrücken derselben an die Antriebswelle beziehungsweise den bandförmigen Aufzeichnungsträger erreicht, da die die Kugel teilweise umfassenden Kugelpfanne über einen grösseren Umfangsbereich an der Kraftübertragung beteiligt ist, als es der Fall wäre, wenn die Kugelpfanne die Kugel symmetrisch zur Achse der Andruckrolle umfassen würde.

Die Erfindung wird im folgenden anhand der Zeichnung, in der ein Ausführungsbeispiel der Erfindung dargestellt ist, auf das sie jedoch nicht beschränkt sein soll, näher erläutert.

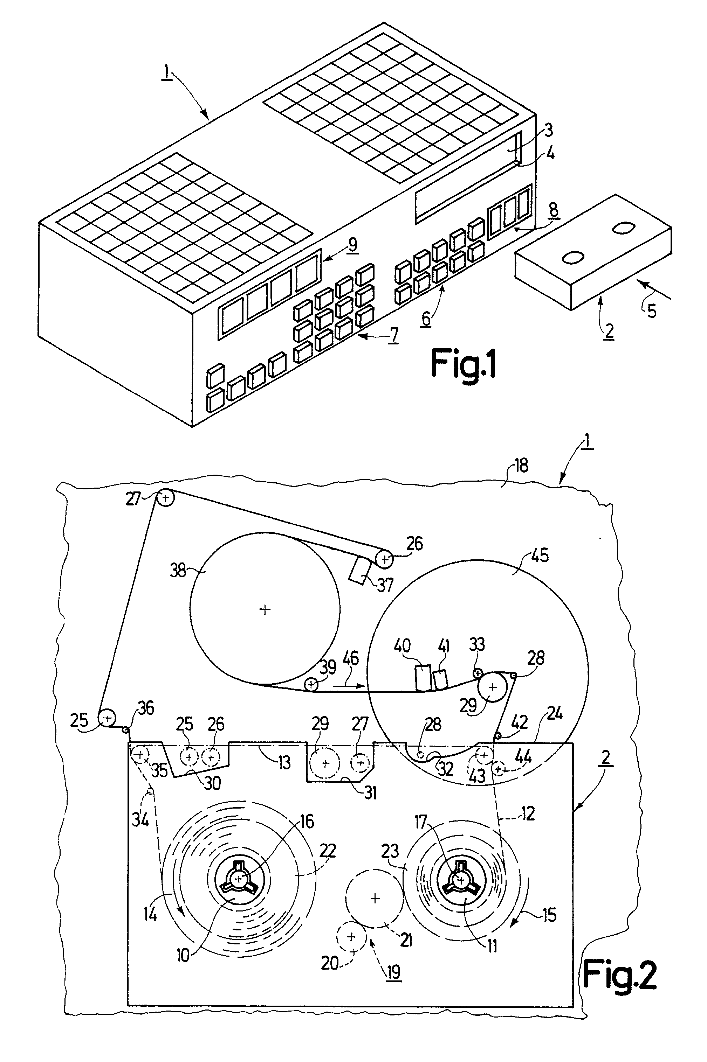

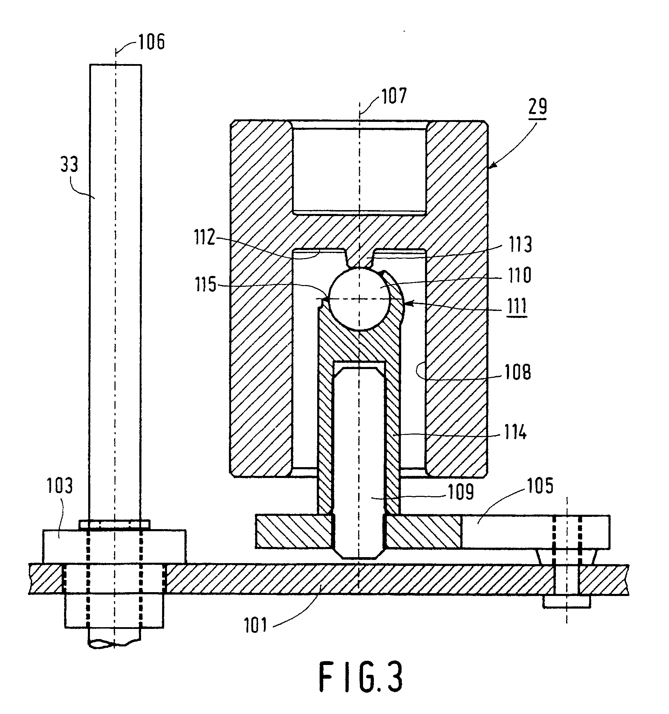

Die Fig. 1 zeigt in einem verkleinerten Massstab schematisch in einer Schrägansicht ein Aufzeichnungs- und Wiedergabegerät für Fernsehsignale und Tonsignale, in das eine Kassette einsetzbar ist, die einen bandförmigen, zwischen zwei nebeneinanderliegenden Wickelkernen verlaufenden, magnetisierbaren Aufzeichnungsträger enthält, auf dem Fernsehsignale in schrägen Spuren mit rotierend antreibbaren Magnetköpfen aufzeichenbar beziehungsweise von demselben wiedergebbar sind. Die Fig. 2 zeigt schematisch einen Teil des Gerätes gemäss Fig. 1 in einem grösseren Massstab als in Fig. 1, wobei eine Kassette in das Gerät eingesetzt ist und der Aufzeichnungsträger aus der Kassette herausgezogen und um geräteseitige Führungs- und Abtastelemente herumgeführt ist. Die Fig. 3 zeigt eine Andruckrollenanordnung in einem Schnitt durch die Andruckrolle.

Die Fig. 1 zeigt ein Bandgerät in der Ausstattung eines Aufzeichnungs- und Wiedergabegerätes 1, das zum Aufzeichnen und Wiedergeben von Fernsehsignalen und Tonsignalen auf einem bandförmigen, magnetisierbaren Aufzeichnungsträger, im folgenden kurz Magnetband genannt, ausgebildet ist. Das Magnetband ist in einer in Fig. 1 schematisch dargestellten Kassette 2 untergebracht, die zwei nebeneinanderliegende Wickelkerne enthält, zwischen denen das Magnetband entlang eines mittels kassettenseitiger Bandführungen festgelegten Verlaufes verläuft. Die Kassette 2 ist durch eine mit einem nach innen verstellbaren Deckel 3 verschliessbare Öffnung 4 hindurch in Richtung des Pfeiles 5 in das Gerät 1 händisch einsetzbar. Beim Einsetzen der Kassette 2 in das Gerät 1 wird dieselbe in eine verstellbare Kassettenaufnahme eingeschoben, mit der die Kassette nach ihrem vollständigen Einsetzen in das Gerät im wesentlichen senkrecht zu den Kassettenhauptwänden in eine in Fig. 2 schematisch dargestellte Betriebslage im Gerät abgesenkt wird. Zum Einschalten von Betriebsarten des Gerätes, wie "Aufnahme", "Wiedergabe im Normalen Vorlauf", "Wiedergabe bei Bandstand", "Wiedergabe im Normalen Rücklauf", "Schneller Vorlauf", "Schneller Rücklauf" und dergleichen, weist das Gerät 1 einen ersten Satz 6 von Bedienungstasten auf. Zum Programmieren des Gerätes und zum Eingeben von weiteren Daten, beispielsweise zum Einstellen einer Tageszeituhr, weist das Gerät 1 einen zweiten Satz 7 von Bedienungstasten auf. Weiters weist das Gerät 1 zwei Anzeigeeinheiten 8 und 9 auf, deren Anzeigestellen beispielsweise je aus sieben Segmenten aufgebaut sind und die beispielsweise zum Anzeigen von Zählwerksständen eines Zählwerkes zum Messen des Bandverbrauches und zum Anzeigen von Uhrzeiten dienen.

Wie bereits erwähnt, wird eine in das Gerät 1 eingesetzte Kassette 2 in eine Betriebslage abgesenkt. Wie in Fig. 2 schematisch gezeigt ist sind in der Kassette 2 zwei nebeneinanderliegende, rotierend antreibbare Wickelkerne 10 und 11 untergebracht, zwischen denen das Magnetband 12 innerhalb der Kassette 2 entlang dem teilweise durch eine strichpunktierte Linie 13 angegebenen Verlauf verläuft und auf die das Magnetband korrespondierend zu seiner jeweiligen Fortbewegungsrichtung wahlweise und in entgegengesetztem Wickelsinn, wie dies mit den Pfeilen 14 und 15 angegeben ist, aufwickelbar ist. Beim Absenken einer Kassette 2 in ihre Betriebslage treten mit den in der Kassette untergebrachten Wickelkernen 10 und 11 zwei Wickeldorne 16 und 17 in Antriebsverbindung, die in einer Montageplatte 18 des Gerätes 1 drehbar gelagert sind. Mit den Wickeldornen 16 und 17 sind die beiden koaxial auf dieselben aufgesetzten Wickelkerne 10 und 11 rotierend antreibbar. Die Wickeldorne können selbstverständlich auch anders als dargestellt ausgebildet sein und beispielsweise je einen zentrisch angeordneten Positionierdorn zum Positionieren eines Wickelkernes und einen zu diesem exzentrisch angeordneten Antriebsdorn zum Antreiben eines Wickelkernes aufweisen. Zum Antreiben der beiden Wickeldorne 16 und 17 in den entgegengesetzten Drehrichtungen 14 und 15 ist eine in Fig. 2 nur schematisch angedeutete Antriebseinrichtung 19 vorgesehen, die ein im Gerät 1 stationär angeordnetes, motorisch antreibbares Treibrad 20 und ein von diesem antreibbares, parallel zur Montageplatte 18 verstellbar gehaltenes Antriebsrad 21 aufweist, das wahlweise mit einem von zwei zu den Wickeldornen 16 und 17 koaxial angeordneten und mit ihnen drehfest verbundenen, auf demselben axialen Niveau liegenden Wickeldornrädern 22 und 23 umfangsseitig in Antriebsverbindung bringbar ist, wie nachfolgend noch detailliert beschrieben ist.

Beim Absenken der Kassette 2 in ihre Betriebslage wird Sein an ihre Stirnseite 24 vorgesehener, nicht dargestellter Kassettenverschlussdeckel geöffnet, wodurch eine Kassettenöffnung in der Stirnseite 24 freigegeben wird, durch die hindurch das in der Kassette untergebrachte Magnetband 12 aus derselben herausführbar ist, und treten vier Bandführungen 25, 26, 27 und 28 und eine Andruckrolle 29, wobei sich die Bandführungen und die Andruckrolle je in einer in Fig. 2 mit strichpunktierten Linien dargestellten Ruhelage befinden, in drei Ausnehmungen 30, 31 und 32 der Kassette 2 ein, wobei sie das Magnetband 12 im Bereich des mit der strichpunkti Linie 13 dargestellten Verlaufes hintergreifen. Nach erfolgtem Absenken der Kassette in ihre Betriebslage sind die Bandführungen 25, 26, 27 und 28 je in ihre in Fig. 2 mit vollen Linien dargestellte Betriebslage verstellbar, wobei auch die Andruckrolle 29 in eine in Fig. 2 nicht dargestellte Zwischenlage in unmittelbarer Nähe einer Bandantriebswelle 33 verstellbar ist. Dabei wird das Magnetband 12 durch die Kassettenöffnung in der Stirnseite 24 der Kassette 2 hindurch aus derselben herausgeführt. Aus der erwähnten Zwischenlage ist die Andruckrolle 29 in ihre in Fig. 2 mit einer vollen Linie dargestellte Betriebslage verstellbar, in der sie das Magnetband 12 an die Bandantriebswelle 13 andrückt. Da die Einrichtungen zum Öffnen des Kassettenverschlussdeckels, zum Verstellen der Bandführungen und der Andruckrolle und zum Andrücken der Andruckrolle an die Bandantriebswelle für die Erfindung nicht wesentlich sind, sind diese auch der Einfachheit halber nicht dargestellt. Derartige Einrichtungen sind aus bestehenden Geräten dieser Art bekannt.

Nach einer Verstellung der Bandführungen 25, 26, 27 und 28 und der Andruckrolle 29 in ihre Betriebslagen nimmt das Magnetband 12 den in Fig. 2 mit einer vollen Linie dargestellten Verlauf ein. Dabei erstreckt sich das Magnetband vom Wickelkernlo über zwei in der Kassette 2 enthaltene Bandführungen 34 und 35, einen Bandspannungsfühlstift 36, der Bestandteil einer nicht dargestellten Bandspannungsregeleinrichtung ist, die verstellbaren Bandführungen 25, 27 und 26, einen ortsfesten Magnetkopf 37 zum Löschen aller auf dem Magnetband 12 aufgezeichneten Signale, eine trommelförmige Abtasteinheit 38, die rotierend antreibbare Magnetköpfe antreibbare Magnetköpfe zum Aufzeichnen und Wiedergeben von Fernsehsignalen in und aus schräg zur Längsrichtung des Magnetbandes verlaufenden, nebeneinanderliegenden Videospuren enthält, eine ortsfeste Bandführung 39, einen ortsfesten Magnetkopf 40 zum Löschen von Tonsignalen, die in einer in Längsrichtung des Magnetbandes 12 verlaufenden Tonspur aufgezeichnet sind, einen weiteren ortsfesten Magnetkopf 41 zum Aufzeichnen und Wiedergeben von Tonsignalen in der Tonspur und zum Aufzeichnen und Wiedergeben von Synchronisationssignalen in und aus einer in Längsrichtung des Magnetbandes und parallel neben der Tonspur verlaufenden Synchronspur, die Bandantriebswelle 33, an die das Magnetband 12 mit der Andruckrolle 29 angedrückt ist, die verstellbare Bandführung 28, eine ortsfeste Bandführung 42 und zwei weitere in der Kassette 2 enthaltene Bandführungen 43 und 44 zum Wickelkern 11.

Die Bandantriebswelle 33, die in üblicher Weise mit einer Schwungscheibe 45 verbunden ist, ist wahlweise in einer von beiden Drehrichtungen mit konstanter Drehzahl antreibbar. Auf diese Weise ist bei an die Bandantriebswelle 33 angedrückter Andruckrolle 29 das Magnetband 12 wahlweise in einer von zwei zueinander entgegengesetzten Fortbewegungsrichtungen mit konstanter Fortbewegungsgeschwindigkeit antreibbar. Beim Antreiben der Bandantriebswelle 33 mit einer vorgegebenen Drehzahl gemäss Fig. 2 entgegen dem Uhrzeigersinn wird das Magnetband 12 in Richtung des Pfeiles 46 angetrieben, was dem sogenannten "Normalen Vorlauf" entspricht, bei dem das Aufzeichnen von Signalen in der Betriebsart "Aufnahme" und auch das normale Wiedergeben derselben in der Betriebsart "Wiedergabe im Normalen Vorlauf" erfolgt und bei dem zum Aufwickeln des Magnetbandes 12 auf den Wickelkern 11 in Richtung des Pfeiles 15 das mit dem Wickeldorn 17 drehfest verbundene Wickeldornrad 23 von dem Antriebsrad 21 der Antriebseinrichtung 19 angetrieben wird. Wenn die Bandantriebswelle 33 mit derselben vorgegebenen Drehzahl, aber gemäss Fig. 2 im Uhrzeigersinn angetrieben wird, dann wird das Magnetband 12 entgegen der Richtung des Pfeiles 46 angetrieben, was dem sogenannten "Normalen Rücklauf" entspricht, der auch als "Reverse-Lauf" bezeichnet wird, bei dem in der Betriebsart "Wiedergabe im Normalen Rücklauf" eine Wiedergabe von aufgezeichneten Fernsehsignalen zur Erzeugung von rückläufigen Bewegungsabläufen erfolgt und bei dem zum Aufwickeln des Magnetbandes 12 auf den Wickelkern 10 in Richtung des Pfeiles 14 das mit dem Wickeldorn 16 drehfest verbundene Wickeldornrad 22 von dem Antriebsrad 21 der Antriebseinrichtung 19 angetrieben wird.

Wie bereits erwähnt, sind im Gerät 1 auch die Be triebsarten "Schneller Vorlauf" und "Schneller Rücklauf" einschaltbar, in denen das Magnetband 12 mit erhöhter Fortbewegungsgeschwindigkeit zwischen den Wickelkernen 10 und 11 umgespult wird. Vor einem solchen Umspulvorgang wird bei vorliegendem Gerät durch Rückverstellung der verstellbaren Bandführungen 25, 26, 27 und 28 und der Andruckrolle 29 von ihren Betriebslagen in ihre in Fig. 2 mit strichpunktierten Linien dargestellten Ruhelagen und durch gleichzeitiges Antreiben des Wickeldornes 16 in Richtung des Pfeiles 14 mit Hilfe des Antriebsrades 21 der Antriebseinrichtung 19 das Magnetband 12 in die Kassette 2 zurückgeführt, wobei das Magnetband 12 dann wieder entlang des mit der strichpunktierten Linie 13 angegebenen Verlaufes verläuft. Beim Umspulen des Magnetbandes 12 in den Betriebsarten "Schneller Vorlauf" und "Schneller Rücklauf" erfolgt der Antrieb des Magnetbandes 12 ausschliesslich durch Antreiben eines der beiden Wickelkerne 10 und 11, wobei auch in diesen beiden Betriebsarten die beiden Wickeldorne 16 und 17 von der Antriebseinrichtung 19 antreibbar sind, deren Antriebsrad 21 in der Betriebsart "Schneller Vorlauf" mit dem Wik-keldornrad 23 und in der Betriebsart "Schneller Rücklauf" mit dem Wickeldornrad 22 in umfangsseitige Antriebsverbindung gebracht wird.

In Fig. 3 ist mit 101 die Chassisplatte eines Aufzeichnungs- und/oder Wiedergabegerätes für einen bandförmigen Aufzeichnungstrager bezeichnet, zu dessen Fortbewegung eine Antriebswelle 33 dient, die mittels einer Lagerbuchse 103 an der Chassisplatte 101 drehbar gelagert ist. In üblicher Weise wird der hier nicht näher dargestellte bandförmige Aufzeichnungsträger mit einer Andruckrolle 29 an die Antriebswelle 33 angedrückt, wodurch er von der Antriebswelle 33 her bei sich mitdrehender Andruckrolle 29 fortbewegt wird. Um ein solches Andrücken der Andruckrolle 29 an die Antriebswelle 33 beziehungsweise den bandförmigen Auf-zeichnungstrager zu ermöglichen, ist die Andruckrolle 29 auf einem Träger 105 angeordnet, mit dem sie zur Antriebswelle 33 hin beziehungsweise von dieser weg verstellbar ist. Beim vorliegenden Ausführungsbeispiel ist dieser Träger 105 durch einen an der Chassisplatte 101 schwenkbar gelagerten Hebelarm gebildet. An sich könnte aber auch ein verschiebbarer Schlitten als Träger 105 für die Andruckrolle 29 dienen.

Bekanntlich ist es für eine einwandfreie gleich-förmige Fortbewegung des bandförmigen Aufzeich-nungsträgers von ganz besonderer Bedeutung, dass die Andruckrolle 29 umfangsseitig exakt an der An triebswelle 33 beziehungsweise dem dazwi-schen liegenden bandförmigen Aufzeichnungsträ-ger anliegt, dies insbesondere auch bei sich mitdrehender Andruckrolle. In bekannter Weise wird hierzu eine drehbare und taumelbare Lagerung der Andruckrolle 29 am Träger 105 gewählt, damit sich die Andruckrolle hinsichtlich ihrer Lage an den Verlauf der Antriebswelle 33 anpassen kann, was dann erforderlich ist, wenn eine Schrägstellung der Achse 106 der Antriebswelle 33 gegenüber dar Achse 107 der Andruckrolle 29 vorliegt. Eine solche drehbare und taumelbare Lagerung wird hierbei mit zwei miteinander zusammenwirkenden Lagerteilen erreicht von welchen einer durch eine Kugel und der andere durch eine die Kugel teilweise umfassende Kugelpfanne gebildet ist, wobei die beiden Lagerteile koaxial zur Achse 107 der Andruckrolle 29 innerhalb einer axial verlaufenden Vertiefung 108 in derselben liegen und dabei einer der beiden Lagerteile innerhalb der Vertiefung 108 mit der Andruckrolle 29 und der andere der beiden Lagerteile über einen Tragzapfen 109 mit dem Träger 105 fest verbunden ist. Bei einer derartigen Lagerung ist nun erfindungsgemäss vorgesehen, dass die den einen der beiden Lagerteile bildende Kugel 110 innerhalb der Vertiefung 108 mit der Andruckrolle 29 und die den anderen der beiden Lagerteile bildende Kugelpfanne 111 über den Tragzapfen 109 mit dem Träger 105 fest verbunden ist. Hierzu ist beim vorliegenden Ausführungsbeispiel vorgesehen, dass am Boden 112 der in der Andruckrolle 29 vorgesehenen Vertiefung 108 eine koaxial zur Achse 107 der Andruckrolle 29 verlaufende Erhebung 113 vorgesehen ist, an der die Kugel 110 befestigt wird. Besteht hierbei der Grundkörper der Andruckrolle 29 aus einem schweissbaren metallischen Werkstoff, der dann beispielsweise umfangsseitig mit einer auf vulkanisierten, hier nicht näher dargestellten Kautschukschicht versehen sein kann, und die Kugel 110 aus einem schweissbaren Stahl, so kann das Anbringen der Kugel 110 an der Erhebung 113 auf besonders einfache Weise durch einen Schweissvorgang erfolgen. Weiters kann die Kugelpfanne 111 vorteilhafterweise aus einem Kunststoffteil bestehen, der auf die Kugel 110 aufschnappbar ausgebildet ist, wobei im vorliegenden Fall die Kugelpfanne 111 mit einem hülsenförmigen Ansatz 114 versehen ist, mit dem sie auf den Tragzapfen 109 aufgepresst wird, so dass sie ihrerseits über den Tragzapfen 109 fest mit dem Träger 105 verbunden ist. Selbstverständlich stehen für derartige Verbindungen einerseits der Kugel 110 mit der Andruckrolle 29 und andererseits der Kugelpfanne 111 mit dem Tragzapfen 109 im hierfür bekannten Stand der Technik auch noch eine Reihe andere Möglichkeiten zur Verfügung.

Dadurch, dass im vorliegenden Fall die Kugel 110 mit der Andruckrolle 29 und die Kugelpfanne 111 über den Tragzapfen 109 mit dem Träger 105 fest verbunden ist, bildet die Kugel 110 den sich drehenden Lagerteil, wogegen die Kugelpfanne 111 den stillstehenden Lagerteil bildet. Da sich Kugeln mit einer wesentlich höheren Genauigkeit hinsichtlich ihres Oberflächenverlaufes herstellen lassen als Kugelpfannen, hat somit im vorliegenden Fall der sich drehende Lagerteil die höhere Genauigkeit, wodurch bei an die Antriebswelle 29 bezie-hungsweise den bandförmigen Aufzeichnungsträ-ger angelegter und sich dabei mitdrehender Andruckrolle 29 ein besonders exakter gleichförmiger schlagfreier Lauf derselben und damit eine ein-wandfreie gleichförmige Fortbewegung des band-förmigen Aufzeichnungsträgers erreicht wird.

Wie aus der Zeichnung ersichtlich ist, ist beim vorliegenden Ausführungsbeispiel die Kugelpfanne 111 so ausgebildet, dass sie die Kugel 110 in bezug auf die Achse 107 der Andruckrolle 29 asymmetrisch umfasst, wobei bei an die Antriebswelle 33 angelegter Andruckrolle 29 die Öffnung 115 die Kugelpfanne 111 in Richtung zur Antriebswelle 33 hin geneigt ist. Auf diese Weise wird eine besonders gute Kraftübertragung vom Träger 105 auf die Andruckrolle 29 zum Andrücken derselben an die Antriebswelle 33 beziehungsweise den bandförmigen Aufzeichnungsträger erreicht, da die die Kugel 110 teilweise umfassende Kugelpfanne 111 über einen grösseren Umfangsbereich an der Kraftübertragung beteiligt ist, als es der Fall wäre, wenn die Kugelpfanne die Kugel symmetrisch zur Achse 107 der Andruckrolle 29 umfassen würde.

## Ansprüche

1. Bandgerät zum antreiben eines Bandes, welches Bandgerät eine Andruckrollenanordnung zum Andrücken eines bandförmigen Aufzeichnungsträgers an eine Antriebswelle umfasst, bei welcher die Andruckrolle auf einem Träger drehbar und taumelbar gelagert ist und diese Lagerung mit zwei miteinander zusammenwirkenden Lagerteilen erfolgt, von welchen leiner durch eine Kugel und der andere durch eine die Kugel teilweise umfassende Kugelpfanne gebildet ist, wobei die beiden Lagerteile koaxial zur Achse der Andruckrolle innerhalb einer axial verlaufenden Vertiefung in derselben liegen und einer der beiden Lagerteile innerhalb der Vertiefung mit der Andruckrolle und der andere der beiden Lagerteile über einen Tragzapfen mit dem Träger fest verbunden ist, dadurch gekennzeichnet, dass die den einen der beiden Lagerteile bildende Kugel innerhalb der Vertiefung mit der Andruckrolle und die den anderen der beiden Lagerteile bildende Kugelpfanne über den Tragzapfen mit dem Träger fest verbunden ist.

2. Bandgerät nach Anspruch 1, dadurch gekennzeichnet, dass die den einen der beiden Lagerteile bildende Kugel von der den anderen der beiden Lagerteile bildenden Kugelpfanne in Bezug auf die Achse der Andruckrolle asymmetrisch umfasst ist, wobei bei an die Antriebswelle angelegter Andruckrolle die Öffnung der Kugelpfanne in Richtung zur Antriebswelle hin geneigt ist.

3. Andruckrollenanordnung anwendbar in einem Bandgerät nach Anspruch 1 oder 2.

Fig.1

Fig.2

FIG.3

8